(19) Europäisches Patentamt / European Patent Office / Office européen des brevets

(11) **EP 4 425 481 A1**

(12) **EUROPEAN PATENT APPLICATION**

(43) Date of publication:
**04.09.2024 Bulletin 2024/36**

(21) Application number: **23205714.1**

(22) Date of filing: **25.10.2023**

(51) International Patent Classification (IPC):
*G10K 11/178* (2006.01)

(52) Cooperative Patent Classification (CPC):
**G10K 11/17854; G10K 11/17821; G10K 11/17835; G10K 11/17879;** G10K 2210/12821; G10K 2210/3039

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2023 KR 20230026840**

(71) Applicants:
• **Hyundai Mobis Co., Ltd.**
**Gangnam-gu**
**Seoul 06141 (KR)**

• **SPb Audio Lab Bulgaria, JSC**
**8200 Burgas (BG)**

(72) Inventors:
• **JANG, Se Yeong**
**16941 Yongin-si, Gyeonggi-do (KR)**
• **PARK, Joo Won**
**16891 Yongin-si, Gyeonggi-do (KR)**
• **KIM, Dong Hwan**
**16508 Suwon-si, Gyeonggi-do (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **VEHICLE FOR CONTROLLING NOISE FROM ROAD AND CONTROL METHOD THEREFOR**

(57)     The present disclosure relates to vehicles. In an aspect of the present disclosure, there is provided a method of controlling a vehicle configured to control noise from a road. The method includes: receiving an input signal depending on conditions of the road; extracting at least one root mean square (RMS) value based on the received input signal; determining whether to update a filter related to road noise control based on the at least one RMS value; and outputting a noise control audio signal in response to the input signal through a speaker.

EP 4 425 481 A1

**Description**

## CROSS-REFERENCE TO RELATED APPLICATIONS

The present application claims priority to previous Korean Patent Application No. 10-2023-0026840, filed on Feb. 28, 2023, and incorporated herein by reference in its entirety.

## TECHNICAL FIELD

The embodiments are applicable to vehicles in all fields, and more specifically, for example, to active road noise control systems based on monitoring the types and conditions of road surfaces.

## BACKGROUND

The active noise control technology is a technology that recognizes sound from a noise source using external input sensors besides microphones and generates sound with the opposite phase and frequency to cancel out the input noise through speakers.

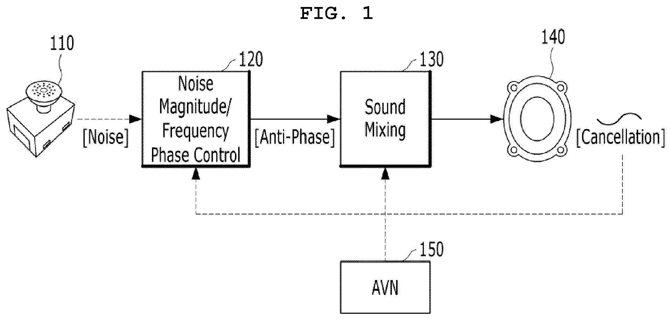

FIG. 1 illustrates a vehicle that controls road noise according to the conventional technology.

A controller 120 analyzes an input signal received through a sensor 110 such as a microphone, acceleration sensor, etc., and generates an anti-phase signal. The generated anti-phase signal is mixed at an amplifier 130 and then transmitted through a speaker 140.

The anti-phase signal has an effect of partially canceling various types of noise entering the interior of the vehicle. To enhance the attenuation effect of such anti-phase signals during operation, an operation block such as Audio Video Navigation (AVN) 150 generate anti-phase signals that reflect the characteristics of a secondary path. These signals are then used as feedback to control the degree of cancellation.

In the prior art, noise control systems are typically composed of input sensors for collecting noise source data and microphones for feedback as described above. However, the conventional active noise control technology mainly depends on feedforward systems. As a result, if high-amplitude data is input to the input sensor due to random shocks, this signal is amplified and output to the inside, which may cause impact noise or repetitive amplification noise that can be induced.

This phenomenon occurs not only due to direct shocks on the input sensor but also due to real-world operating conditions such as road irregularities (e.g., rough roads, road damages, etc.) and unpredictability in operating conditions (e.g., sudden noise, etc.). Such restrictions prevent the conventional active noise control logic from adapting actively and cause critical issues such as performance limitations.

## SUMMARY

Accordingly, the present disclosure is directed to a vehicle for controlling noise from a road and control method therefor that substantially obviates one or more problems due to limitations and disadvantages of the related art.

To address the aforementioned issues, a method of monitoring and characterizing reference signals for an active noise control_road (ANC_R) algorithm is provided in an embodiment of the present disclosure. According to this method, the types and conditions of road surfaces may be incorporated into the system, thereby improving both the stability and performance of the system.

It will be appreciated by persons skilled in the art that the objects that could be achieved with the present disclosure are not limited to what has been particularly described hereinabove and the above and other objects that the present disclosure could achieve will be more clearly understood from the following detailed description.

To achieve these objects and other advantages and in accordance with the purpose of the disclosure, as embodied and broadly described herein, there is provided a method of controlling a vehicle configured to control noise from a road. The method includes: receiving an input signal depending on conditions of the road; extracting at least one root mean square (RMS) value based on the received input signal; determining whether to update a filter related to road noise control based on the at least one RMS value; and outputting a noise control audio signal in response to the input signal through a speaker.

The input signal may be obtained by an acceleration sensor included in the vehicle.

The determination may further include: ignoring the input signal and updating the filter when the input signal is greater than or equal to a first input reference value; and adjusting an output to zero without updating the filter when the input signal is greater than or equal to the first input reference value and when the input signal is greater than or equal to a first filter adaptation reference value.

The determination may further include: ignoring the input signal and updating the filter when the RMS value is greater than or equal to a second input reference value; and adjusting an output to zero without updating the filter when the RMS value is greater than or equal to the second input reference value and when the input signal is greater than or equal to a second filter adaptation reference value.

The at least one RMS value may include both a first RMS of a relatively short period and a second RMS of a relatively long period.

In another aspect of the present disclosure, there is provided a vehicle configured to control noise from a road. The vehicle may include: an acceleration sensor configured to detect an input signal depending on conditions of the road; a controller configured to extract at least one root mean square (RMS) value based on the input signal and determine whether to update a filter related to road noise control based on the at least one RMS value; and a speaker configured to output a noise control audio signal in response to the input signal.

According to any one of the embodiments of the present disclosure, different thresholds may be applied to specialized signals to determine the operating state of a filter, thereby improving the stability of the system.

According to any one of the embodiments of the present disclosure, noise irregularities (e.g., rough road, road damage,) may be detected in advance.

According to any one of the embodiments of the present disclosure, significant fluctuations in an input signal may be detected, and the state of the filter may be controlled such that the adaptive logic does not respond to the fluctuations, thereby improving the performance of the system.

It will be appreciated by persons skilled in the art that the effects that could be achieved with the present disclosure are not limited to what has been particularly described hereinabove and other advantages of the present disclosure will be more clearly understood from the following detailed description.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 illustrates a vehicle that controls road noise according to the conventional technology;
FIG. 2 is an overall block diagram of an autonomous driving control system to which an autonomous driving apparatus according to any one of embodiments of the present disclosure is applicable;
FIG. 3 is a diagram illustrating an example in which an autonomous driving apparatus according to any one of embodiments of the present disclosure is applied to a vehicle;
FIG. 4 is a flowchart schematically illustrating a process for controlling road noise according to an embodiment of the present disclosure;
FIG. 5 illustrates road surface conditions where road noise may occur, which may not be solved by the conventional technology; and
FIG. 6 is a flowchart illustrating in detail a process of controlling road noise according to an embodiment of the present disclosure.

## DETAILED DESCRIPTION

Reference will now be made in detail to the preferred embodiments of the present disclosure, examples of which are illustrated in the accompanying drawings. Wherever possible, the same reference numbers will be used throughout the drawings to refer to the same or like parts.

Hereinafter, the embodiments of present disclosure will be described in detail with reference to the accompanying drawings to enable those skilled in the art to easily embody and practice the present disclosure. However, the present disclosure is not limited to the embodiments described herein and may be implemented in various forms. In the drawings, irrelevant parts are omitted to clarify the present disclosure, and similar reference numerals are assigned to similar parts throughout the specification.

Throughout the entire specification, when it is said that a certain portion "comprises or includes" a particular component, it means that other components are not excluded but may be further included unless specified otherwise.

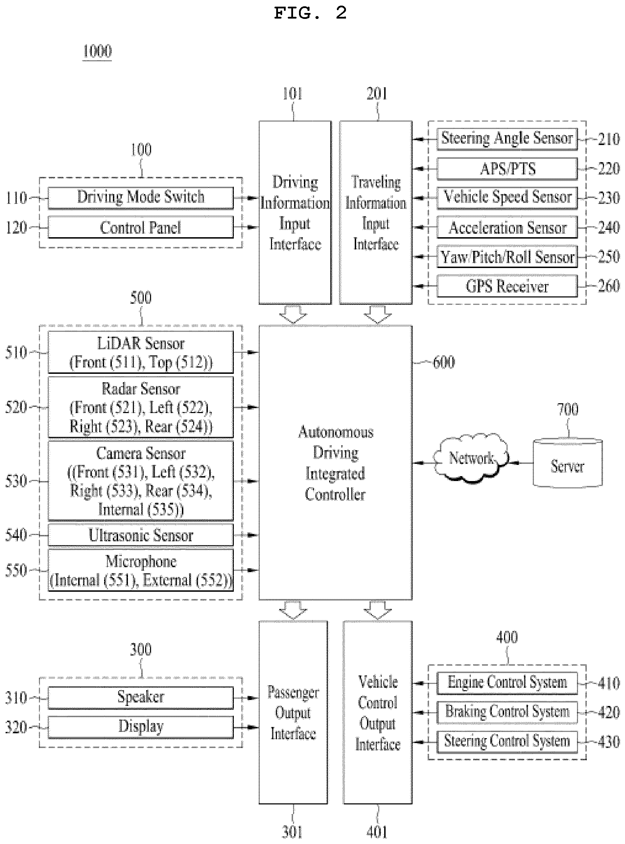

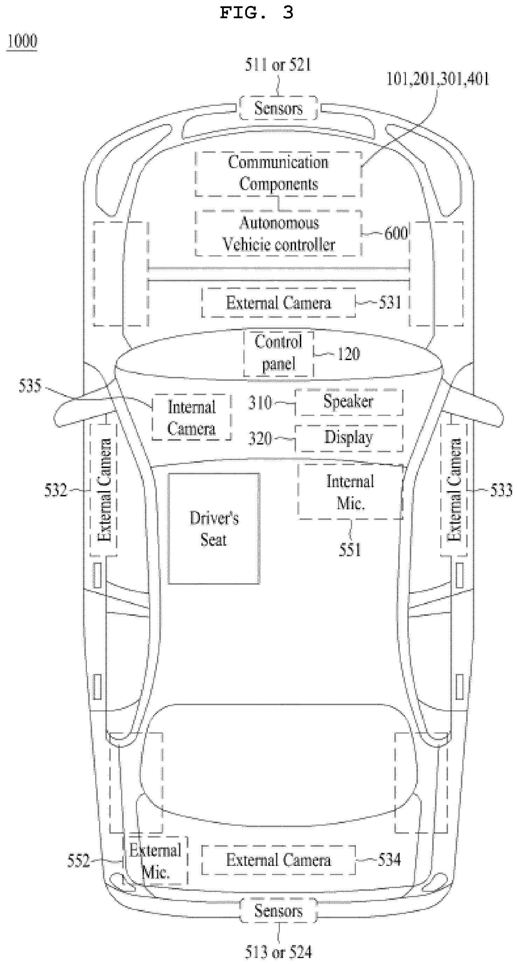

FIG. 2 is an overall block diagram of an autonomous driving control system to which an autonomous driving apparatus according to any one of embodiments of the present disclosure is applicable. FIG. 3 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 2 and 3.

As illustrated in FIG. 2, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 2, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 2.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 2. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 2, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 2, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 2.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 2, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 3 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 3 may perform the same or similar functions as those illustrated in FIG. 2. FIG. 3 illustrates in more detail a relative positional relationship of each component (based on the interior of the autonomous driving vehicle 1000) as compared with FIG. 2.

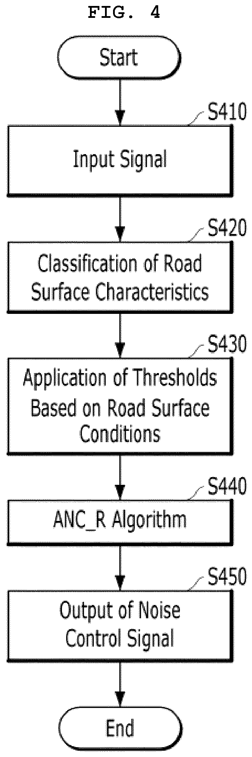

FIG. 4 is a flowchart schematically illustrating a process for controlling road noise according to an embodiment of the present disclosure.

According to an embodiment of the present disclosure, an input signal for active road noise control may be monitored and characterized to detect the type and conditions of a road surface and control the state of a filter, thereby improving system stability against divergence.

The present disclosure is to implement a more active and stable adaptive system capable of responding to unstable input signals, which may occur during vehicle driving.

The active noise control (ANC) system uses an adaptive feedforward filtered-x least mean square (FxLMS) structure to adaptively remove undesirable noise in the listening environment. The corresponding structure updates (or refreshes) the filter coefficient of adaptive logic based on an input signal, where the presence or absence of the input signal significantly affects the system performance.

In addition, since the system output is directly exposed to the listening environment of the user, there is a need for methods of preventing noise or disturbance caused by system divergence in advance.

Referring to the process illustrated in FIG. 4, input signals may be monitored, and thresholds may be applied depending on road surface types for detection and control. In addition, the state of a filter may be automatically updated based on the monitored values, thereby ensuring safety and maintaining performance.

First, a vehicle according to an embodiment of the present disclosure detects an input signal as shown in FIG. 4 (S410). In this case, the input signal may be, for example, information from an acceleration sensor, etc.

The vehicle according to an embodiment of the present disclosure classifies road surface characteristics (S420). To this end, for example, the vehicle calculates a long-term input signal root mean square (RMS), a short-term input signal RMS, or an RMS variance.

The vehicle according to an embodiment of the present disclosure applies thresholds depending on road surface conditions (S430), to identify input signals. For example, the vehicle checks whether the long-term input signal RMS exceeds an upper limit thereof, whether the short-term input signal RMS exceeds an upper limit thereof, or whether the RMS variance exceeds an upper limit thereof.

The vehicle according to an embodiment of the present disclosure operates based on an active noise control_road (ANC_R) algorithm, which is an arbitrary algorithm (S440). For example, the vehicle determines the execution of the ANC_R algorithm based on an adaptation command and calculates output values using the ANC_R algorithm.

Finally, the vehicle according to an embodiment of the present disclosure outputs a noise control signal (S450). This operation is implemented with a speaker.

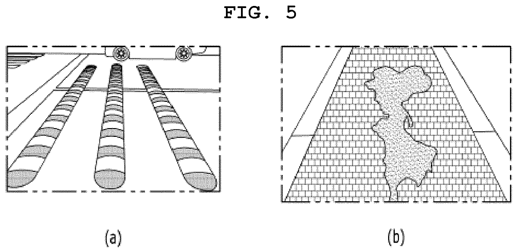

FIG. 5 illustrates road surface conditions where road noise may occur, which may not be solved by the conventional technology.

The actual road surface is not uniform. For example, short sections of bumpy roads shown in (a) of FIG. 5 or uneven roads shown in (b) of FIG. 5 may cause various vibrations in vehicles.

Considering that the active road noise cancellation system aims to reduce road noise and road vibrations are used as inputs to the system, the road vibrations are the most essential factor.

Therefore, it is important to accurately detect generated vibrations and design a filter that produces an output with the opposite phase.

In the prior art, the focus is only on the current input signal, regardless of the road surface types shown in (a) or (b) of FIG. 5. As a result, the filter is updated at every moment and reacts sensitively to any changes in the input signal.

However, this conventional method does not differentiate between short uneven roads and long uneven roads, resulting in the issue of divergence due to unstable input signals.

For example, if the filter is continuously updated in response to large and consecutive inputs, the value of the filter keeps increasing, which may cause the active noise cancellation system to diverge due to the feedback of the generated large output.

On the other hand, according to an embodiment of the present disclosure, if an unstable signal occurs during a short period, the filter is updated by ignoring the unstable signal. In addition, if unstable signals are continuously input, the filter is not updated. This allows not only to improve system stability but also to maintain optimal performance.

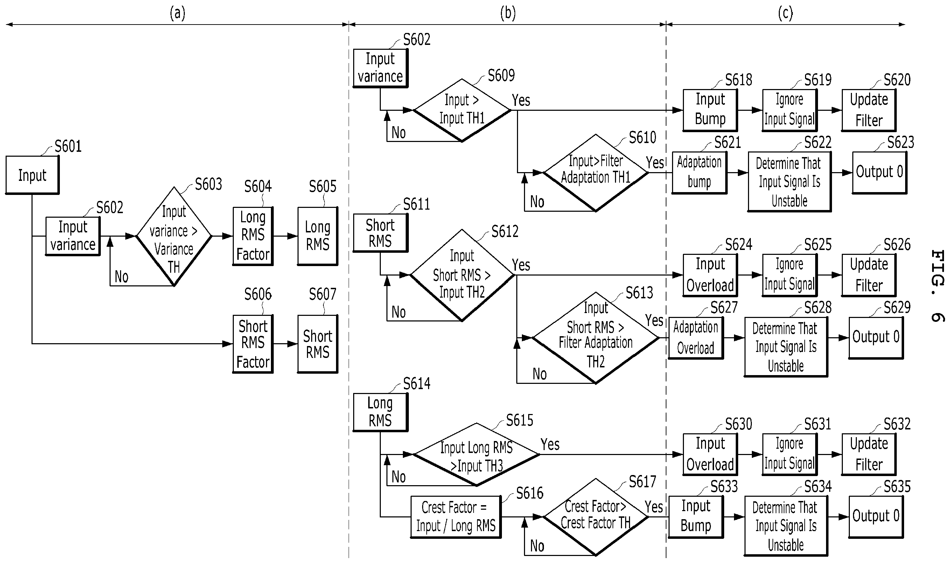

Details thereof will be described in the following specific embodiments with reference to FIG. 6.

FIG. 6 is a flowchart illustrating in detail a process of controlling road noise according to an embodiment of the present disclosure.

In FIG. 6, (a) illustrates an embodiment for monitoring and classifying input signals.

In FIG. 6, (b) illustrates an embodiment for applying thresholds.

In FIG. 6, (c) illustrates an embodiment for determining the state of a filter.

First, as shown in (a) of FIG. 6, a vehicle according to an embodiment of the present disclosure receives an input signal (S601). In step S601, the input signal is received, for example, from an acceleration sensor..

The vehicle calculates the power, variance, etc. of the input signal (S602).

Then, the vehicle determines whether the variance of the input signal exceeds a configured value (or variance threshold) (i.e., variance TH) (S603). If the variance of the input signal exceeds the configured value, the vehicle uses a long RMS factor (S604) to derive a long RMS value (S605).

Otherwise, the vehicle uses a short RMS factor (S606) to derive a short RMS value (S607).

In this case, the RMS value is calculated according to Equation 1 below.

[Equation 1]
$$RMS = RMS * Forgetting\ Factor + (1.0 - Forgetting\ Factor) * Current\ Value$$

As shown in (b) of FIG. 6, the vehicle according to an embodiment of the present disclosure uses the received input signal (S608) to determine whether the input signal exceeds a first input reference value (i.e., input TH1) (S609).

If it is determined that the input signal exceeds the first input reference value (S609), the vehicle identifies an input bump (S618), ignores the corresponding input signal (S619), and updates the filter (S620).

If it is determined that the input signal exceeds the first input reference value (S609) and if the input signal exceeds a first filter adaptation reference value, the vehicle identifies an adaptation bump (S621), determines that the input signal is unstable (S622), and adjusts the output of the filter to 0 (S623) as shown in (c) of FIG. 6.

As described above, the present disclosure proposes to adaptively change whether to update the filter not only depending on the input signal but also based on the short and long RMS values.

For example, as shown in (b) of FIG. 6, the vehicle according to an embodiment of the present disclosure uses the short RMS value (S611) to determine whether the input short RMS value exceeds a second input reference value (i.e., input TH2) (S612).

If it is determined that the input short RMS value exceeds the second input reference value (S612), the vehicle identifies an input overload (S624), ignores the corresponding input signal (S625), and updates the filter (S626) as shown in (c) of FIG. 6.

If it is determined that the input short RMS value exceeds the second input reference value (S612) and if the input short RMS value exceeds a second filter adaptation reference value (S613), the vehicle identifies an adaptation overload (S627), determines that the input signal is unstable (S628), and adjusts the output of the filter to 0 (S629) as shown in (c) of FIG. 6.

As shown in (b) of FIG. 6, the vehicle according to an embodiment of the present disclosure uses the long RMS value (S614) to determine whether the input long RMS value exceeds a third input reference value (input TH2) (S615).

If it is determined that the input long RMS value exceeds the third input reference value (S615), the vehicle identifies an input overload (S630), ignores the corresponding input signal (S631), and updates the filter (S632) as shown in (c) of FIG. 6.

Additionally, the vehicle according to an embodiment of the present disclosure further obtains a crest factor, which is calculated according to Equation 2 below.

[Equation 2]
$$Crest\ Factor = |Input\ peak| / Input\ Long\ RMS$$

If the crest factor exceeds a threshold (i.e., crest factor TH) (S617), the vehicle identifies an input bump (S633), ignores the corresponding input signal (S634), and updates the filter (S635) as shown in (c) of FIG. 6.

The input bump shown in FIG. 6 is determined for cases where the magnitude of the input signal is weak. In this case, the vehicle determines to update the filter by ignoring only the corresponding input signal.

The adaptation bump is determined for cases where the magnitude of the input signal is strong. In this case, the vehicle determines not to update the filter and adjusts the output to 0.

The input overload is determined for cases where the magnitude of the input signal is weak. In this case, the vehicle determines to ignore only the corresponding input signal and updates the filter.

The adaptation overload is determined for cases where the magnitude of the input signal is strong. In this case, the vehicle determines not to update the filter and adjusts the output to 0.

Therefore, the vehicle is designed to ignore the corresponding input signal when the conditions of the input bump and input overload are satisfied. Additionally, upon receiving a command to ignore the corresponding input signal, the vehicle continues filter adaptation by excluding the corresponding input signal.

On the other hand, when the conditions of the adaptation bump and adaptation overload are satisfied, the vehicle determines that the input signal is unstable. In addition, when determining that the input signal is unstable, the vehicle stops the filter adaptation.

In summary, a vehicle that controls road noise according to an embodiment of the present disclosure receives an input signal depending on road conditions. The input signal may be acquired through, for example, an acceleration sensor included in the vehicle.

Furthermore, the vehicle extracts at least one RMS value based on the received input signal. The at least one RMS value includes, for example, at least one of a first short-term RMS and a second long-term RMS.

The vehicle determines whether or not to update a filter related to road noise control based on the at least one RMS value.

For example, if the input signal is greater than or equal to a first input reference value, the vehicle ignores the input signal and updates the filter. If the input signal is greater than or equal to the first input reference value and if the input signal is greater than or equal to a first filter adaptation reference value, the vehicle adjusts the output to 0 without updating the filter.

If the RMS value is greater than or equal to a second input reference value, the vehicle ignores the input signal and updates the filter. If the RMS value is greater than or equal to the second input reference value and if the input signal is greater than or equal to a second filter adaptation reference value, the vehicle adjusts the output to 0 without updating the filter.

Finally, the vehicle outputs a noise control audio signal in response to the input signal through a speaker.

The inventive method shown in FIG. 6 may be implemented by those skilled in the art as an inventive apparatus with reference to FIG. 2.

The acceleration sensor 240 detects an input signal depending on road conditions.

The controller 600 extracts at least one RMS value based on the input signal. The controller 600 determines whether to update a filter related to road noise control based on at least one RMS value.

The speaker 310 is designed to output a noise control audio signal in response to the input signal.

In another aspect of the present disclosure, the above-described proposals or operations of the present disclosure may be provided as code capable of being implemented, performed, or executed by a "computer" (a comprehensive concept including a system-on-chip (SoC), a microprocessor, etc.) or an application, a computer-readable storage media, or a computer program products storing or including the code. These embodiments also fall within the scope of the present disclosure.

The detailed descriptions of the preferred embodiments of the present disclosure have been provided to enable those skilled in the art to implement and practice the present disclosure. Although the description has been made with reference to the preferred embodiments of the present disclosure, those skilled in the art will understand that the present disclosure may be variously modified and changed without departing from the scope of the present disclosure. For example, those skilled in the art may use the components described above in the embodiments in various combinations.

Therefore, the present disclosure is not intended to be limited to the embodiments disclosed herein, but rather to encompass the broadest scope consistent with the principles and novel features disclosed herein.

**Claims**

1. A method of controlling noise in a vehicle traveling on a road, the method comprising:

   receiving an input signal depending on conditions of the road;
   extracting at least one root mean square (RMS) value based on the received input signal;

determining whether to update a filter related to road noise control based on the at least one RMS value; and with the filter, outputting a noise control audio signal in response to the input signal from a speaker.

2. The method of claim 1, wherein the input signal is provided by an acceleration sensor of the vehicle.

3. The method of claim 1 or 2, wherein the determining whether to update the filter further comprises:

when the input signal is greater than or equal to a first input reference value, updating the filter; and when the input signal is greater than or equal to the first input reference value and the input signal is greater than or equal to a first filter adaptation reference value, adjusting an output of the filter to zero without updating the filter.

4. The method of claim 3, wherein the determining whether to update the filter further comprises:

when the RMS value is greater than or equal to a second input reference value, ignoring the input signal and updating the filter; and when the RMS value is greater than or equal to the second input reference value and the input signal is greater than or equal to a second filter adaptation reference value, adjusting an output of the filter to zero without updating the filter.

5. The method of any one of claims 1 to 4, wherein the at least one RMS value includes both a first RMS of a relatively short period of the input signal and a second RMS of a relatively long period of the input signal.

6. A vehicle configured to control noise from a road, the vehicle comprising:

an acceleration sensor configured to provide an input signal depending on conditions of the road; a controller configured to extract at least one root mean square (RMS) value based on the input signal and determine whether to update a filter related to road noise control based on the at least one RMS value; and a speaker configured to output a noise control audio signal in response to the input signal as filtered by the filter.

7. The vehicle of claim 6, wherein the input signal is produced by an acceleration sensor of the vehicle.

8. The vehicle of claim 6 or 7, wherein the controller is configured to:

ignore the input signal and update the filter when the input signal is greater than or equal to a first input reference value; and adjust an output of the filter to zero without updating the filter when the input signal is greater than or equal to the first input reference value and the input signal is also greater than or equal to a first filter adaptation reference value.

9. The vehicle of claim 8, wherein the controller is configured to:

ignore the input signal and update the filter when the RMS value is greater than or equal to a second input reference value; adjust an output of the filter to zero without updating the filter when the RMS value is greater than or equal to the second input reference value and the input signal is greater than or equal to a second filter adaptation reference value.

10. The vehicle of any one of claims 6 to 9, wherein the at least one RMS value includes both a first RMS of a relatively short period of the input signal and a second RMS of a relatively long period of the input signal.

FIG. 1

110

120

Noise
Magnitude/
Frequency
Phase Control

[Noise]

[Anti-Phase]

130

Sound
Mixing

140

[Cancellation]

150

AVN

## FIG. 2

1000

## FIG. 3

1000

FIG. 4

```
                    ┌──────────┐
                    │  Start   │
                    └──────────┘
                          │
                          ▼            S410
        ┌───────────────────────────────┐
        │         Input Signal          │
        └───────────────────────────────┘
                          │
                          ▼            S420
        ┌───────────────────────────────┐
        │    Classification of Road     │
        │    Surface Characteristics    │
        └───────────────────────────────┘
                          │
                          ▼            S430
        ┌───────────────────────────────┐
        │    Application of Thresholds  │
        │    Based on Road Surface      │
        │         Conditions            │
        └───────────────────────────────┘
                          │
                          ▼            S440
        ┌───────────────────────────────┐
        │       ANC_R Algorithm         │
        └───────────────────────────────┘
                          │
                          ▼            S450
        ┌───────────────────────────────┐
        │       Output of Noise         │
        │       Control Signal          │
        └───────────────────────────────┘
                          │
                          ▼
                    ┌──────────┐
                    │   End    │
                    └──────────┘
```

FIG. 5

(a)                    (b)

FIG. 6

EP 4 425 481 A1

Europäisches
Patentamt

European
Patent Office

Office européen
des brevets

# EUROPEAN SEARCH REPORT

Application Number

EP 23 20 5714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/215826 A1 (TANI MITSUHIRO [JP]) 7 July 2022 (2022-07-07) * paragraph [0019]; figure 2 * * paragraph [0034] – paragraph [0057] * ----- | 1-10 | INV. G10K11/178 |
| A | EP 3 660 837 A1 (HARMAN INT IND [US]) 3 June 2020 (2020-06-03) * paragraphs [0001], [0007] * * paragraph [0032] – paragraph [0037]; claim 1 * ----- | 1-10 | |

TECHNICAL FIELDS
SEARCHED      (IPC)

G10K

The present search report has been drawn up for all claims

| Place of search | Date of completion of the search | Examiner |
|---|---|---|
| The Hague | 12 March 2024 | Lorne, Benoît |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

........................................................................

& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 23 20 5714

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2024

| Patent document cited in search report | | Publication date | Patent family member(s) | | Publication date |
|---|---|---|---|---|---|
| US 2022215826 | A1 | 07-07-2022 | JP 2022106389 A | | 20-07-2022 |
| | | | US 2022215826 A1 | | 07-07-2022 |
| EP 3660837 | A1 | 03-06-2020 | CN 111261137 A | | 09-06-2020 |
| | | | EP 3660837 A1 | | 03-06-2020 |
| | | | KR 20200066181 A | | 09-06-2020 |
| | | | US 10580399 B1 | | 03-03-2020 |
| | | | US 2020175956 A1 | | 04-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230026840